# EUROPEAN PATENT APPLICATION

(11) **EP 4 640 049 A1**
(43) Date of publication of application: **29.10.2025**
(21) Application number: 25171296.4
(22) Date of filing: 17.04.2025
(51) Int. Cl.: A01M 23/24, A01M 23/30, A01M 31/00

(54) **SMALL ANIMAL TRAP AND SMALL ANIMAL TRAP SYSTEM**

(30) Priority: 23.04.2024 DE 102024111338
(71) Applicant: Pentland Firth Software GmbH, 81379 München (DE)
(72) Inventor: HEINRICH, Frank, 81379 München (DE)
(74) Representative: Ter Meer Steinmeister & Partner

(57) **Abstract**

A small animal trap (100) comprising a trap housing (120) having at least one trap opening (121); at least on trap element (130) being arranged within the trap housing (120), wherein the at least one trap element (130) is accessible via the at least one trap opening (121); at least one first identification device (150) for providing a first small animal identification signal; a second identification device (140) for providing a second small animal identification signal; wherein the at least one first identification device (150) and the second identification device (140) are different to each other; a control unit (170) for identifying by the first small animal identification signal and the second small animal identification signal if the at least one trap element (130) has caught a small animal, and for providing a trap status signal; and at least one energy source (180) for providing energy to the at least one second identification device (140), and the control unit (170).

## Description

### TECHNICAL FIELD

The present disclosure relates to a small animal trap and a small animal trap system for monitoring a plurality of small animal traps. Furthermore, it relates to method for operating a small animal trap.

### TECHNICAL BACKGROUND

Small animal traps are basically known and used, for example, to keep warehouses, shops, basements, factories, restaurants, etc. free of vermin or unwanted small animals. Such protection against vermin or unwanted small animals is or may be mandatory by law for hygienic reasons and/or for reasons of containing and preventing the spread of pathogens.

Conventional small animal traps lead to a sufficient protection against vermin or unwanted small animals, but these conventional small animal traps are susceptible for false triggering and false identification of caught small animals. Therefore, conventional small animal traps have to be controlled/checked in a high frequency leading to a high amount of used manpower and working time just for keeping up the protection against the vermin or unwanted small animals. Furthermore, there are regulations with respect until when the small animal should be removed or hygiene reasons (decaying dead animals).

Hence, there is an object of the present disclosure to provide a small animal trap which significantly reduces the number of false triggers and false identification of caught small animals in order to reduce the used manpower and working time for keeping up the protection against the vermin or unwanted small animals.

This object is solved by the features of the independent claims. Preferred embodiments are given in the dependent claims.

### SUMMARY OF THE INVENTION

In one aspect of the invention a small animal trap is presented. The small animal trap comprises at least on trap element; at least one first identification device for providing a first small animal identification signal; a second identification device for providing a second small animal identification signal; wherein the at least one first identification device and the second identification device are different to each other; a control unit for identifying by the first small animal identification signal and the second small animal identification signal if the at least one trap element has caught a small animal, and for providing a trap status signal; and at least one energy source for providing energy to at least one of the second identification device, and the control unit.

In another aspect a small animal trap is provided comprising: a trap housing having at least one trap opening; at least on trap element is arranged within the trap housing, wherein the at least one trap element is accessible via the at least one trap opening, at least one identification device for identifying a parameter and for providing a small animal identification signal corresponding to the parameter, a control unit accommodated in the trap housing for processing the small animal identification signal and for determining whether the at least one trap element has caught a small animal, and for providing a trap status signal based on the determination, and at least one energy source accommodated in the trap housing for providing energy at least to the control unit and/or to the at least one identification device, wherein the at least one identification device is a capacitive sensor for measuring a capacitive change in the small animal trap due to an existence of a small animal and the identification device is disposed under or at least partially overlapping with the at least one trap element.

In an embodiment of the small animal trap, only one identification device is provided per trap element. This provides a more simple and costs effective solution. So in case of two trap 3elements inside the housing, there are two identification devices, wherein each trap element has one identification device. Preferably the identification device is below or at partially overlapping with the trap element to precisely detecting whether a small animal has been caught.

In a preferred solution the small animal trap may include a trap housing having at least one trap opening.

In one or more embodiments, the trap element may be arranged within the trap housing, preferably the at least one trap element may be accessible via the at least one trap opening.

In a preferred solution the small animal trap may use the first small animal identification signal as wakeup for the controller. The first identification device may generate its pulse by itself and the pulse is used for waking up the controller. Also, the second small animal sensor or identification device is not directly connected to the power source, but the dielectric field to ground is measured. So, the controller measures a change of the voltage and generates based thereon the second small animal identification signal.

Small animals represent any animal, in particular mammal, which are identified as pests by the public. For instance, small animal may be a mouse, a rat, or rodent but is not limited thereto.

The small animal trap may represent any trap for catching and/or neutralizing small animals. For instance, a small animal trap may be a mouse trap or rat trap but is not limited thereto. The small animal trap may be any mechanical, electronical, and/or biological trap but is not limited thereto. The small animal trap comprises a trap housing, at least one trap element, at least one first identification device, a second identification device, a control unit, and at least one energy source but is not limited thereto. Additionally, the small animal trap comprises at least one trap element triggering status identification device and/or at least one third identification device.

The trap housing may represent any housing or casing of the small animal trap. The trap housing may be provided, in particular manufactured, out of plastic or metal but is not limited thereto. The plastic may be a non-transparent, transparent or semi-transparent plastic. For instance, the trap housing may be made of plastic or aluminum but is not limited thereto. The trap housing may have a rectangle, quadratic, triangle of polygonal form but is not limited thereto. The trap housing may be a single piece housing. Alternatively, the trap housing may be a multi-piece housing. For instance, the trap housing may comprise a trap housing base and a trap housing cap respectively cover but is not limited thereto. The multi-piece housing may be releasably, e.g. by a bolt, or permanently fixed to each other. Each part of the multi-piece housing may be made of the same material. The trap housing comprises at least one trap opening being configured for providing access to the trap element. The trap housing may comprise a bottom surface, a top surface, and at least three side walls, wherein the bottom surface, a top surface are parallel to each other. The trap housing may have an elongated shape like a tunnel having two entrances being opposed to each other. The trap housing cover might be curved or arched.

The trap opening may represent any opening in the trap housing being dimensioned in such a manner that at least the head or the whole body of the small animal can enter the trap opening. For instance, the trap opening has a surface area of 15 to 100 cm², preferably 50 cm², but is not limited thereto. The trap opening may have an oval, a round, a quadratic, a rectangle, or a polygonal form but is not limited thereto. The trap opening may be arranged in at least one sidewall of the trap housing but is not limited thereto.

The trap element may represent any element of the animal trap being configured for catch, capture, trap or neutralize, i.e. control/kill, a small animal. For instance, the trap element comprises a small animal neutralization device for catching, capturing, and/or neutralizing a small animal and a triggering device for triggering the small animal neutralization device. For instance, the small animal neutralization device may be a clamp like used in conventional known mouse traps. The clamp may be pre-stressed by a spring from a rest position to a triggering position. The clamp may be pre-stressed manually by the user of the small animal trap or automatically by an electronic or mechanical clamp pre-stressing device. The clamp may be hold by the triggering device in a triggering position. The clamp may be made of metal having e.g. a cover made of plastic. Alternatively, the small animal neutralization device may be a cage, a gas chamber, a poison injection chamber, an electric shock providing unit, a captive bolt pistol but is not limited thereto. The triggering device may be designed or is configured as to be a weight sensor which triggers when a weight is exceeded, or a light barrier which triggers when a light barrier is broken, or a temperature sensor which triggers when a threshold temperature is exceeded, or a motion sensor which triggers when there is movement, or a touch sensor which triggers when touched mechanically, or a photosensitive element which triggers when the light changes, or a combination thereof. **In** other words, the triggering device prevents a movement, in particular a fast movement, of the clamp from the triggering position to a rest position and, when the triggering device is triggered, the movement of the clamp is released/enabled. In this context, the term "fast" is to be understood broadly and represents a movement of the clamp from the triggering position to the rest position in less than 1 second, preferably less tha n 0.5 second, more preferably less than 0.25 seconds, more preferably 0.1 second but is not limited thereto. The rest position may be the position in which the spring force of the spring is lowest, wherein the triggering position may be the position in which the spring force of the spring is highest. The triggering position and the rest position may differ by at least 45 degree, preferable 90 degree, rotation of the clamp in the contrary direction of the spring force but is not limited thereto. The trap element may be fully or at least partially arranged within the trap housing, wherein the at least one trap opening provides access to the trap element. The trap element may further comprise a lure device in which a lure is provided respectively arranged. The lure device may be arranged at or on the triggering device but is not limited thereto.

The identification device, in particular first, second and third identification device, may represent any electrical or electronic device being able respectively configured to identify, respectively measure, a small animal in the small animal trap in an electronic manner respectively by using electronic means. For instance, the identification of small animals in the small animal trap may be provided by using at least one of a capacitive sensor, a vibration sensor, or an infrared sensor, piezo sensor but is not limited thereto. Preferably, a combination of at least two of the capacitive sensor, the vibration sensor, or the infrared sensor and a piezo sensor or other combination might be used.

The identification device may be further able respectively configured for providing/generating a small animal identification signal. The small animal identification signal may represent any signal or data indicating that a small animal has been identified in the small animal trap. For instance, the small animal identification signal may be "YES" or "NO", "1" or "0", "small animal trapped" or "small animal not trapped", "blocked" or "not-blocked", e.g. it could be 0V or 3.3V, but is not limited thereto.

In the present invention, there may be two or three different identification devices (sensors) included in the small animal trap. Specifically, the at least one first identification device, the second identification device and/or the at least one third identification device may be different to each other, i.e. they measure different physical parameters. For instance, the at least one second identification device may be a capacitive sensor, the first identification device may be a vibration sensor, in particular piezo-sensor, and the at least one third identification device may be an infrared sensor, in particular a Pyroelectric Infrared Sensor, PIR-sensor. In other words, each one of the identification devices uses different sensing methods and proceedings of different sensing parameters. Relevant parameters may be the vibration of the small animal trap and/or the temperature but is not limited thereto. When the at least one first identification device, the second identification device, and the at least one third identification device are different to each other, the provided small animal identification signals provided by each one of the first, second and third identification device may also be different to each other. For instance, the at least one second identification device may comprise capacity values and the at least one third identification device may comprise temperature values, but the first identification device may comprise a movement/vibration value.

The at least one first identification device, the second identification device and/or the at least one third identification device may be directly or indirectly communicatively coupled by wire or wireless to the control unit and/or the energy source but is not limited thereto. The at least one first identification device, the at least one third identification device and/or the second identification device may be located or arranged in, i.e. fully or at least partially, an identification device housing.

The identification device housing may represent any housing which includes only the at least one first identification device, the second identification device, and/or at least one third identification device. The identification device housing may be separate to the trap housing. The identification device housing may be attached to a top surface and/or bottom surface of the trap housing. The identification device housing may be arranged fix, i.e. permanently, or releasably, e.g. by a bolt or clip at the trap housing. Since, the identification device housing may be arranged at the top surface and/or bottom surface of the trap housing, the at least one first identification device, the at least one third identification device, and/or the at least one second identification device may be arranged below and/or above trap housing. The identification device housing may be a single piece housing or a multi-piece housing. The identification device housing may fully cover the top surface and/or bottom surface of the trap housing but is not limited thereto. The identification device housing may comprise a control unit housing mounting element on which only the control unit housing is mounted/fixed. The identification unit housing may comprise a recess in which the at least one first identification device, the at least one third identification device, and/or the second identification device are fully or partially arranged. Additionally, the at least one first identification device, the at least one third identification device, and/or the second identification device may be arranged directly below and/or above the at least one trap element. For instance, the at least one first identification device and the at least one third identification device can be arranged below the trap element and the second identification device can be arranged above the trap element but is not limited thereto. The identification device housing may be provided, in particular manufactured, out of plastic or metal but is not limited thereto. For instance, the identification device housing may be made of aluminum but is not limited thereto. The identification device housing may be made of the same material like the trap housing but is not limited thereto. The at least one first identification device, the at least one second identification device and/or the third identification device may be arranged on or within a printed circuit board, PCB. For instance, the at least one first identification device, the at least one third identification device, and/or the second identification device are arranged on respective separate printed circuit boards, wherein the separate printed circuit boards are directly or indirectly electrically connected to each other. Alternatively, the at least one first identification device, the at least one third identification device, and/or the second identification device are arranged on or included in a same printed circuit board. The printed circuit board may comprise a printed circuit board connection which electrically connects the printed circuit board with the control unit. The printed circuit board connection may be arranged in the control unit housing mounting element but is not limited thereto. The printed circuit board may further comprise a trap element triggering status identification device connection which electrically connects the printed circuit board with the trap element triggering status identification device.

The trap element triggering status identification device may represent any device being configured for identifying a trap element triggering status of the trap element. The trap element triggering status may be "blocked" or "non-blocked", or "1" or "0" or 0V or 3.3V, but is not limited thereto. The trap element triggering status identification device may be further configured for providing a trap element triggering status signal. For instance, the trap element triggering status signal may be "YES" or "NO", "1" or "0", "small animal trapped" or "small animal not trapped", "blocked" or "not-blocked" but is not limited thereto. The trap element triggering status identification device may be directly or indirectly by wire or wireless communicatively coupled to/with the control unit and the energy source. The trap element triggering status identification device may comprises or consist of at least one trap element triggering status identification sensor being arranged on or within a trap element triggering status identification sensor holding element. The trap element triggering status identification sensor holding element may be provided, in particular manufactured, out of plastic or metal but is not limited thereto. For instance, the trap element triggering status identification sensor holding element may be made of aluminum but is not limited thereto. The trap element triggering status identification sensor holding element may be made of the same material like the trap housing and/or the identification device housing. The trap element triggering status identification sensor holding element may be arranged respectively fixed or mounted by a trap element triggering status identification device holding element fixing structure to the trap housing base but is not limited thereto. The at least one trap element triggering status identification sensor may be releasably, e.g. by a bolt, of fix attached to the trap element triggering status identification sensor holding element.

The control unit may represent any unit being configured for identifying by the first small animal identification signal, the second small animal identification signal, the third small animal identification signal, and/or the trap element triggering status signal if the at least one trap element has caught a small animal. The control unit may include a first receiving unit for receiving the first small animal identification signal, a second receiving unit for receiving the second small animal identification signal, a third receiving unit for receiving the third small animal identification signal, and/or a fourth receiving unit for receiving the trap element triggering status signal. Further, the control unit may comprise a processor respectively micro computing unit, MCU, processing the received signals for providing/determining a trap status signal. The trap status signal may be any signal or data indicating the status of the small animal trap, i.e. if the at least one trap element has caught a small animal or not. For instance, the trap status signal may be "full" or "empty", "YES" or "NO", "1" or "0", "small animal trapped" or "small animal not trapped", "blocked" or "not-blocked" but is not limited thereto. Exemplary, the trap status signal may be set to "1" if one or more of the first small animal identification signal, the second small animal identification signal, and/or the third small animal identification signal have identified a small animal and the trap element triggering status signal has identified a change in the status of the triggering status of the trap element. Otherwise, the trap status signal may be set to "0". Alternatively, the trap status signal may be any signal or data indicating the status of the small animal trap, i.e. if the at least one trap element has caught a small animal or not, by separately presenting, including, or providing the first small animal identification signal, the second small animal identification signal, the third small animal identification signal and/or the trap element triggering status signal. For instance, the trap status signal may be [first small animal identification signal, the second small animal identification signal, the third small animal identification signal, and the trap element triggering status signal]. Therefore, when the small animal trap has caught a small animal, the trap status signal may be [1,1,1,1] but is not limited thereto.

The control unit may further comprise a memory unit, for storing the received signals. The control unit may further include an identification or a display device and/or communication device. The display device may represent any device being configured for displaying the trap status signal to the user of the small animal trap. For instance, the display device may be a single light emitting diode, LED, a plurality of light emitting diodes, LEDs, a display/screen or a touch screen but is not limited thereto. For instance, the display device may be configured for receiving an input from the user of the small animal trap and is also configured for providing the user input to the control unit. For instance, the color of the LED may be red, green and/or orange but is not limited thereto. The number of light emitting diodes, LEDs, may correspond to the number of separate signals, i.e. first small animal identification signal, the second small animal identification signal, the third small animal identification signal, and/or the trap element triggering status signal, being processed by the control unit for determining whether the at least one trap element 130 has caught a small animal, and for providing a trap status signal based on the determination. For instance, the display device may include three light emitting diodes, LEDs - one green one, one red one, one orange one. The green one may be light up when the trap status signal may be [0, 0, 0, 0], i.e. when none of the signals indicate a catch of a small animal. Therefore, the green LED may indicate respectively show that the small animal trap is ready for action. The orange one may be light up when the trap status signal may be e.g. [1, 0, 0, 0], i.e. when at least one but not all of the signals indicate a catch of a small animal. Therefore, the orange LED may indicate respectively show that the small animal trap has to be controlled respectively checked by the user. The red one may be light up when the trap status signal may be [1, 1, 1, 1], i.e. when all signals indicate a catch of a small animal. Therefore, the red LED may indicate respectively show that the small animal trap has caught a small animal. Further the display unit may be a communication unit transmitting the trap status signal to a mobile device, e.g. mobile phone, of the user.

The control unit may further comprise a timer and/or may be connected to a user input button. The timer may represent any unit which triggers an action of the control unit when a preset time is expired. The preset time may be freely closable and settable by the user or pre-selected by the manufacturer. The user input button may represent any button with which the user can trigger an action of the control unit. For instance, the user input button may be a turn on/turn off switch but is not limited thereto.

The communication device may represent any device being configured for providing the trap status signal to an external unit, in particular to a small animal trap monitoring device, but is not limited thereto. The communication device may be configured for providing the trap status signal to a plurality of external units, in particular to a plurality of small animal trap monitoring devices respectively a plurality of receiver units of a small animal trap monitoring device,

The communication device may use LoRA WAN, Wifi, NF, NB-IOT or radio for communicating with the external unit, in particular to a small animal trap monitoring device, but is not limited thereto. Beside the trap status signal, the communication device may be configured for transmitting a small animal trap information to a small animal trap monitoring unit and/or an external device. For instance, small animal trap information may include the status, in particular the charge state, of the energy source but is not limited thereto.

Further, the control unit may be further configured for controlling the at least one energy source. For controlling the energy source the control unit may comprises a power management system. For instance, the control unit may be configured for controlling the energy source in such a manner, that the energy source temporarily provides energy to the at least one third identification device, the at least one second identification device, and/or the at least one trap element triggering status identification device. In other words, the control unit may be configured for controlling the energy source in such a manner that the small animal trap may be in an active mode and in an energy saving mode (deep sleep). In the active mode the at least one third identification device, the at least one second identification device, the control unit, and/or the at least one trap element triggering status identification device are provided with energy. In the energy saving mode the control unit and e.g. one of the at least one third identification device, the at least one second identification device, and the at least one trap element triggering status identification device (i.e. active device) may be not provided with energy. In this case the control unit may receive a signal/data from the one active device, wherein the control unit will control the energy source to activate respectively provide energy to the rest of the devices of the small animal trap. For instance, when the first identification device receives a vibration caused a triggering of the small animal trap the control unit will activate the at least one second identification device and/or the at least one third identification device. The energy saving mode may be provided by a deep sleep mode but is not limited thereto. Further, based on the received signal/data, in particular characteristics of the signal/ data, the control unit may be able to determine the kind of caught small animal but is not limited thereto. The control unit may be arranged within a control unit housing. The control unit housing may be a single piece housing or a multi-piece housing. When the control unit housing is a mulita-piece housing, the control unit housing may comprise a cover element and base element. Both elements may be made of the same material, e.g. plastic, but is not limited thereto. The cover element and the base element are releasably, e.g. by bolts, or permanently connected to each other. The control unit housing may be arranged adjacent to or parallel to a sidewall of the trap housing. The control unit housing may be releasably, e.g. by bolts, or fix attached only to the identification device housing, in particular to a control unit housing mounting element of the identification device housing. The control unit may be directly or indirectly by wire or wireless communicatively coupled to/with the at least one first identification device, the at least one third identification device, the second identification device, the at least one trap element triggering status identification device, and/or the energy source but is not limited thereto.

The energy source may be any unit being configured for receiving or providing energy, in particular electrical energy, power or current, to the at least one second identification device, the at least one third identification device, the at least one trap element triggering status identification device, and/or the control unit. The energy source may be configured to be controlled by the control unit. For instance, the energy source may be a socket for receiving a plug, a power cable with a plug, a battery, a wireless charging element, an accumulator, and/or a photovoltaic energy providing unit but is not limited thereto. The energy source may be arranged within or external to the control unit housing, the identification device housing, and/or the trap housing but is not limited thereto. For instance, the energy source may be arranged on a printed circuit board of the control unit.

By identifying if the trap element has caught a small animal based on a plurality of different signals, i.e. at least three signals, a small animal trap can be provided which significantly reduces the number of false triggers and false identification of caught small animals such that the used manpower and working time for keeping up the protection against the vermin or unwanted small animals can be significantly reduced.

In an embodiment of the small animal trap, the small animal trap further comprises at least one trap element triggering status identification device for identifying a triggering status of the at least one trap element and for providing a trap element triggering status signal.

In an embodiment of the small animal trap, the small animal trap further comprises at least one third identification device for providing a third small animal identification signal, wherein the at least one third identification device is different to the at least one first identification device and the second identification device.

In an embodiment of the small animal trap, the at least one energy source is configured for providing energy to the at least one trap element triggering status identification device and/or the at least one third identification device, and/or wherein the control unit is configured for considering the trap element triggering status signal and/or the third small animal identification signal for identifying if the at least one trap element has caught a small animal and for providing a trap status signal.

In an embodiment of the small animal trap, the control unit is configured for providing the trap status signal based on the first small animal identification signal, the second first small animal identification signal and/or the third small animal identification signal and the trap element triggering status signal.

By considering the first small animal identification signal, the second first small animal identification signal and/or the third small animal identification signal and the trap element triggering status signal for providing the trap status signal, the effectivity of the identification of a small animal in the trap opening can be significantly improved.

In an embodiment of the small animal trap, the at least one second identification device is a capacitive sensor for measuring/sensing a temperature change in the small animal trap, the first identification device is a vibration sensor for measuring/sensing a vibration in the small animal trap, and/or the at least one third identification device is an infrared sensor for measuring/sensing a temperature change in the small animal trap.

By using a capacitive sensor, a vibration sensor, and/or an infrared sensor, the effectivity and or the relaibilty of the identification of a small animal in the trap opening can be significantly improved.

In an embodiment of the small animal trap, the at least one first identification device is included in a printed circuit board, PCB, and the second identification device and the at least one third identification device are electrically connected to the printed circuit board; or the second identification device is included in a printed circuit board, PCB, and the at least one first identification device and the at least one third identification device are electrically connected to the printed circuit board; or the third identification device is included in a printed circuit board, PCB, and the at least one first identification device and the second identification device are electrically connected to the printed circuit board; or the at least one first identification device and the second identification device are included in a printed circuit board, PCB, and the at least one third identification device is electrically connected to the printed circuit board; or wherein the at least one first identification device and the at least one third identification device are included in a printed circuit board, PCB, and the second identification device is electrically connected to the printed circuit board; or the at least one third identification device and the second identification device are included in a printed circuit board, PCB, and the at least one first identification device is electrically connected to the printed circuit board; or the at least one first identification device, the at least one third identification device, and the second identification device are included in a printed circuit board, PCB.

By including the at least one first identification device, the second identification device, and/or the at least one third identification device in a printed circuit board, the compatibility of the small animal trap can be significantly increased.

In an embodiment of the small animal trap, the at least one second identification device and/or the at least one third identification device are disposed under or at least partially overlapping with the at least one trap element; and/or wherein the first identification device is provided in the small animal trap.

By disposing under or at least partially overlapping the at least one second identification device and/or the at least one third identification device with the at least one trap element, the effectivity of the identification of a small animal in the trap opening can be significantly improved.

In an embodiment of the small animal trap, the first identification device is provided for receiving a vibration caused a triggering of the small animal trap, wherein the at least one second identification device and/or the at least one third identification device is only activated by the control unit, if a vibration has been detected by the first identification device.

By activating the at least one second identification device and/or the at least one third identification device by the control unit, if a vibration has been detected by the first identification device, an energy saving mode can be provided. Therefore, the needed energy, used energy and/or energy consumption of the small animal trap can be significantly reduced.

In an embodiment of the small animal trap, the at least one trap element includes a small animal neutralization device for neutralizing a small animal; and a triggering device for triggering the small animal neutralization device.

In an embodiment of the small animal trap, the small animal neutralization device is a clamp which is pre-stressed by a spring from a rest position to a triggering position and which is hold by the triggering device in the triggering position and moves back to the rest position when the triggering device is triggered.

In an embodiment of the small animal trap, the triggering device is designed as a weight sensor and triggers when a weight is exceeded, or is designed as a light barrier and triggers when a light barrier is broken, or is designed as a temperature sensor and triggers when a threshold temperature is exceeded, or is designed as a motion sensor and triggers when there is movement, or is designed as a touch sensor and triggers when touched mechanically, or is designed as a photosensitive element and triggers when the light changes or a combination thereof.

In an embodiment of the small animal trap, the at least one first identification device, the at least one third identification device, and/or the second identification device are arranged in or at an identification device housing, wherein the identification device housing is attached to a top surface and/or bottom surface of the trap housing and/or wherein the identification device housing fully covers the top surface and/or bottom surface of the trap housing.

By arranging the at least one first identification device, the at least one third identification device, and/or the second identification device in an identification device housing on the top surface or on the bottom surface of the trap housing, the compactivity of the smart animal trap can be increased. Also, the fully covering of the identification device housing fully of the top surface and/or bottom surface of the trap housing leads to an increased compactivity of the smart animal trap.

In an embodiment of the small animal trap, the at least one first identification device, the at least one third identification device, and/or the second identification device are arranged below and/or above the at least one trap element in or at the trap housing.

By arranging the at least one first identification device, the at least one third identification device, and/or the second identification device below and/or above the at least one trap element in or at the trap housing, the effectivity of the identification of a small animal in the trap opening can be significantly improved.

In an embodiment of the small animal trap, the control unit includes a display and/or communication device for displaying the trap status signal and/or for providing the trap status signal to an external unit.

By including a display and/or communication device in the control unit, an indication of the trap status of the small animal trap can be provided to a user of the small animal trap or to a small animal trap monitoring system such that the user and the system provider are informed about the status of the small animal trap.

In an embodiment of the small animal trap, the control unit is arranged in a control unit housing, wherein the control unit housing is arranged adjacent to or parallel to a sidewall of the trap housing, and wherein the control unit housing is solely coupled to the identification device housing.

By arranging the control unit in a control unit housing being arranged adjacent to or parallel to a sidewall of the trap housing, an easy exchangeability of damaged control units can be provided.

In an embodiment of the small animal trap, the control unit is further configured for controlling the at least one energy source for temporarily providing energy to the at least one of the second identification device, the at least one third identification device and/or the at least one trap element triggering status identification device.

By providing temporarily energy to the at least one second identification device, the at least one third identification device and/or the at least one trap element triggering status identification device by the energy source controlled by the control unit, an energy saving mode can be provided. Therefore, the needed energy, used energy and/or energy consumption of the small animal trap can be significantly reduced.

In an embodiment of the small animal trap, the at least one trap element comprises two trap elements, wherein the at least one trap opening comprises two trap openings being arranged at opposing sides of the trap housing, wherein the trap housing is configured as a tunnel, wherein the trap element triggering status identification device is arranged between the two trap elements.

In further aspect, a small animal trap system is presented. The small animal trap system comprises a small animal trap monitoring device for monitoring at least one small animal trap; at least one small animal trap according to any one of the preceding claims; wherein the small animal trap monitoring device includes a receiving unit for receiving a trap status signal of a communication device of the control unit and includes a display unit for providing and/or displaying the received trap status signal to at least one user of the small animal trap system.

The small animal trap monitoring device may represent any device being configured for monitoring at least one, in particular a plurality of small animal traps in the small animal trap system. The small animal trap monitoring device may comprise a receiving unit for receiving a trap status signal of a communication device of the control unit. Beside the trap status signal, the receiving unit may be configured for receiving a small animal trap information. For instance, small animal trap information may include the status, in particular the charge state, of the energy source but is not limited thereto. Additionally, the small animal trap monitoring device my further comprise a processor and a display unit for providing and/or displaying the received trap status signal to at least one user of the small animal trap system. For instance, the display unit may be respectively include at least one light emitting diode, LED, or a display but is not limited thereto. The color of the LED may be red, green and/or orange but is not limited thereto. The number of light emitting diodes, LEDs, may correspond to the number of separate signals, i.e. first small animal identification signal, the second small animal identification signal, the third small animal identification signal, and/or the trap element triggering status signal, being processed by the control unit for determining whether the at least one trap element 130 has caught a small animal, and for providing a trap status signal based on the determination. For instance, the display unit may include three light emitting diodes, LEDs - one green one, one red one, one orange one. The green one may be light up when the trap status signal may be [0, 0, 0, 0], i.e. when none of the signals indicate a catch of a small animal. Therefore, the green LED may indicate respectively show that the small animal trap is ready for action. The orange one may be light up when the trap status signal may be e.g. [1, 0, 0, 0], i.e. when at least one but not all of the signals indicate a catch of a small animal. Therefore, the orange LED may indicate respectively show that the small animal trap has to be controlled respectively checked by the user. The red one may be light up when the trap status signal may be [1, 1, 1, 1], i.e. when all signals indicate a catch of a small animal. Therefore, the red LED may indicate respectively show that the small animal trap has caught a small animal. Further the display unit may be a communication unit transmitting the trap status signal to a mobile device, e.g. mobile phone, of the user.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

### BRIEF DESCRIPTION OF THE DRAWINGS

In the following, the present disclosure is further described with reference to the enclosed figures:
Fig. 1 illustrates an exterior view on a small animal trap according to the present invention.
Fig. 2 illustrates a detailed view on a small animal trap according to Fig. 1 without the trap housing cover of the trap housing.
Fig. 3 illustrates a detailed view on a small animal trap according to Figs. 1 and 2 in which the trap housing base is disassembled.
Fig. 4 illustrates a detailed view on a small animal trap according to Figs. 1 to 3 in which the identification device housing is disassembled.
Fig. 5 illustrates a detailed view on a small animal trap according to Fig. 1 to 4 in which the control unit housing is disassembled.
Fig. 6 illustrates a detailed view on a small animal trap according to Fig. 1 to 5 in which the trap element triggering status identification device is disassembled.
Fig. 7 illustrates a data flow within the small animal trap.
Fig. 8 illustrates a small animal trap system.
Fig. 9 illustrates a store map including a plurality of small animal traps.
Fig. 10 illustrates an exemplary proceeding for an energy saving mode of the small animal trap.

### DETAILED DESCRIPTION OF EMBODIMENT

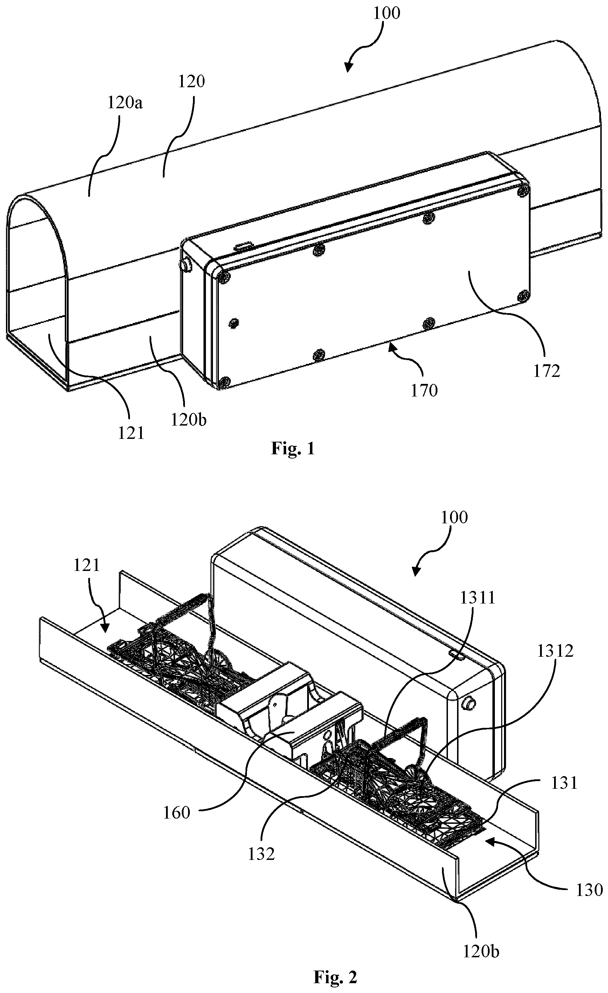

Fig. 1 shows respectively illustrates an exterior view on a small animal trap according to the present invention. The small animal trap 100 comprises a trap housing 120. The trap housing is a multi-piece housing consisting of a trap housing cover 120a and a trap housing base 120b. The trap housing cover 120a might be transparent, semi-transparent or non-transparent. Both the trap housing cover 120a and the trap housing base 120b may made of the same material or of different materials. The small animal trap housing 120 comprises two trap openings 121. The two trap openings 121 are arranged at opposing sidewalls of the small animal trap housing. The housing has an elongated shape like a tunnel having two entrances. It is not illustrated, but only one trap element 130 might be provided within the housing.

The trap openings 121 have a polygonal form and are spaced in such a manner that the whole body of the small animal can enter the trap openings 121. Within or inside of each of the trap openings 121 a trap element 130 is arranged.

A detailed view on the trap element 130 is provided in Fig. 2. The trap element 130 is at least partially exposed by or viewable from the at least one trap opening 121. A control unit 170 respectively a controller 170 being arranged in a control unit housing 172. The control unit housing 172 may be arranged/located adjacent or parallel to the trap housing 120. It is clipped to a long side of the housing, i.e. a sidewall having no trap opening 121. Below the trap housing 120, there is releasably arranged an identification device housing 122 in which a first identification device 150 and two second identification devices 140 are arranged. Optionally, in the identification device housing 122, there may be arranged two third identification devices (not shown).

In other embodiments the controller 170 and the energy source 180 may be accommodated in the trap housing 130.

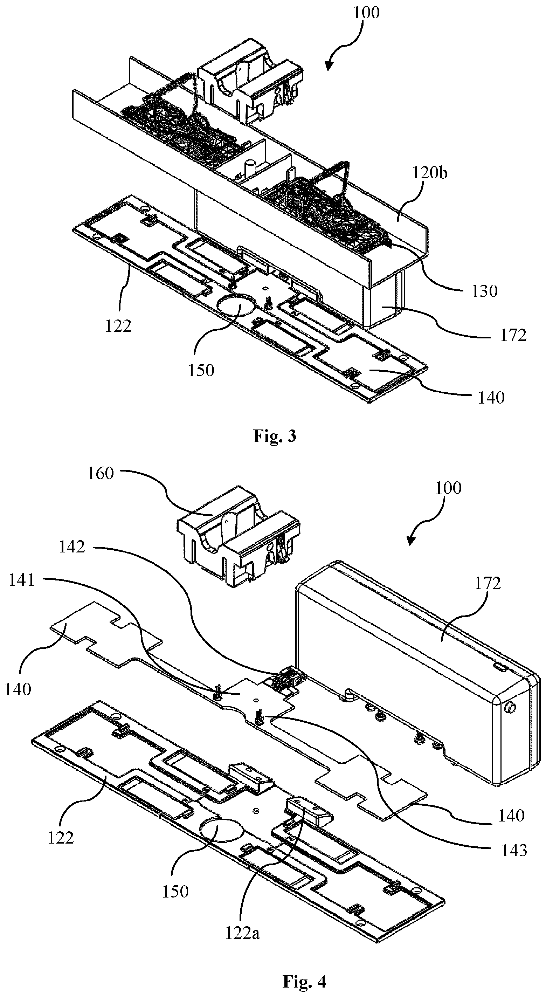

A detailed view on the identification device housing 122 is provided in Figs. 3 and 4. The second identification device 140 is a capacitive sensor which provides a second small animal identification signal. The first identification device 150 is a piezo sensor which provides a first small animal identification signal. The optional third identification device 190 is an infrared sensor which provides a third small animal identification signal. The first identification device 150 and the second identification devices 140 are different to each other. Optionally, the small animal trap 100 further comprises a trap element triggering status identification device 160. The trap element triggering status identification device 160 identifies a triggering status of the two trap elements. In case of only one trap element, only the triggering status of the single trap element is identified. Additionally, the trap element triggering status identification device 160 provides a trap element triggering status signal.

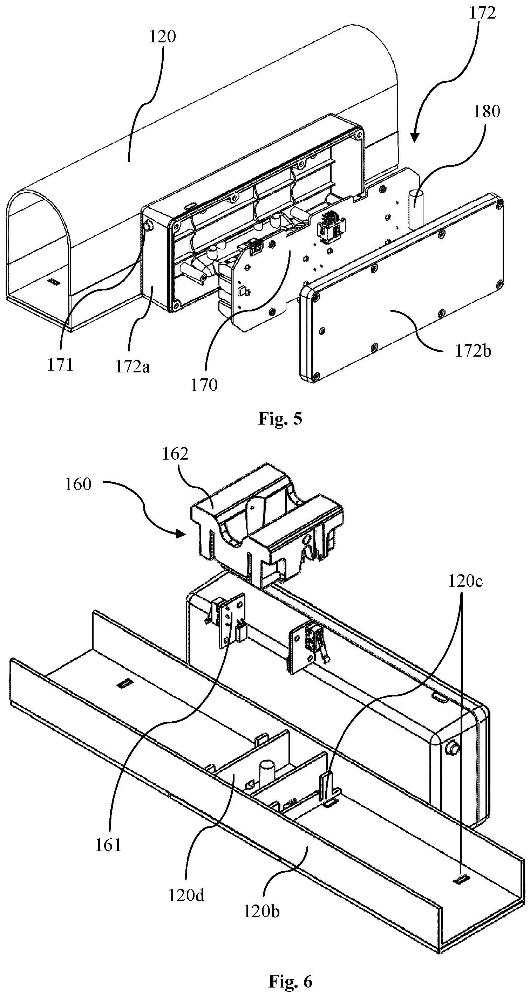

A detailed view of the trap element triggering status identification device 160 is provided in Fig. 6.

The small animal trap 100 further comprises a control unit 170. The control unit may be arranged within the control unit housing 172 or in the trap housing 130. The control unit 170 identifies by the received first small animal identification signal, the second small animal identification signal, optional the third small animal identification signal and the trap element triggering status signal, if the at least one trap element 130 has caught a small animal. Additionally, the control unit 170 provides a trap status signal.

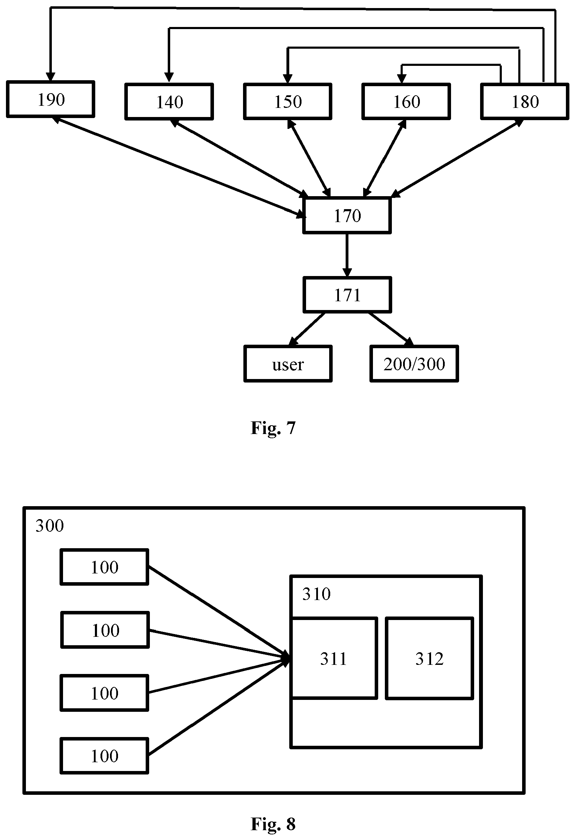

A detailed view of the control unit and the signal flow within the small animal trap 100 is provided in Figs. 5 and 7. Further, the small animal trap 100 comprises an energy source 180. The energy source 180 provides energy to components of the trap, e.g. to the two second identification device 150, the trap element triggering status identification device 160, and the control unit 170.

Fig. 2 shows respectively illustrates a detailed view on a small animal trap according to Fig. 1 without the cover of the trap housing. As described above, there are two trap elements 130 arranged within the trap opening 121. The trap elements 130 are fixed or releasably arranged within the trap housing 120. The trap element 130 comprises a small animal neutralization device 131. The small animal neutralization device 131 is a clamp 1311 which is pre-stressed by a spring 1312. The spring 1312 pre-stresses the clamp 1311 from a rest position, i.e. a position in which the spring force is lowest, to a triggering position, i.e. a position in which the spring force is highest. The clamp 1311, as depicted in Fig. 2, is arranged in the triggering position. The clamp 1311 is hold by the triggering device 132 in the triggering position. The triggering device is designed as a weight sensor which triggers when a weight is exceeded. In other words, the triggering device is a hook combined with a weight sensor which triggers when a weight on the weight sensor is exceeded. Between both trap elements 130, there is arranged the trap element triggering status identification device 160 such that the trap element triggering status identification device 160 can identify the status of the two trap elements 130. When the triggering device is triggered, the clamp 1311 moves back to the rest position.

Fig. 3 shows respectively illustrates a detailed view on a small animal trap according to Figs. 1 and 2 in which the trap housing base is disassembled. As described above, the identification device housing 122 is arranged directly at the bottom surface, i.e. below, the trap housing base 120b. The identification device housing 122 comprises a recess in which both the first identification device 150 and the two second identification device 140 and/or the third identification device (not shown) are fully arranged. The two second identification devices 140 are arranged directly below the trap element 130. The two second identification devices 140 are arranged directly below the trap element triggering status identification 160. The identification device housing 122 and the control unit housing 172 are directly connected to each other.

Fig. 4 shows respectively illustrates a detailed view on a small animal trap according to Figs. 1 to 3 in which the identification device housing is disassembled. The first identification device 150 is arranged on or in a printed circuit board, PCB, 141. The printed circuit board, PCB, 141 comprises a printed circuit board connection 142 with which the PCB 141 is connected to the control unit 170. The PCB 141 further comprises a trap element triggering status identification device connection 143 for connecting the PCB 141 to the trap element triggering status identification 160. The identification device housing 122 comprises a control unit housing mounting element 122a for connecting the control unit housing 172 to the identification device housing 122. Further, the identification device housing 122 comprises a plurality of through holes used for mounting the identification device housing 122 to the bottom surface of the trap housing 120.

Fig. 5 shows respectively illustrates a detailed view on a small animal trap according to Figs. 1 to 4 in which the control unit housing is disassembled. The control unit 170 is arranged within the control unit housing 172. The control unit housing 172 comprises a control unit housing base 172a and a control unit housing cover 172b. The control unit housing base 172a and the control unit housing cover 170b are releasably attached to each other by bolts. The control unit housing 172 may be hermetically sealed such that the small animal trap can also be used outdoor. Within the control unit housing 172, in particular below the control unit 170, the energy source 180 respectively a battery is arranged. A display device 171 of the control unit 170 is arranged on a surface of the control unit housing 172.

Fig. 6 shows respectively illustrates a detailed view on a small animal trap according to Figs. 1 to 5 in which the trap element triggering status identification device is disassembled. The trap element triggering status identification device 160 comprises two trap element triggering status identification sensors 161, each one for a trap element 130, and a trap element triggering status identification sensor holding element 162. The trap element triggering status identification sensor holding element 162 is made of the same material like the trap housing 120. Within or on the trap element triggering status identification sensor holding element 162, the two trap element triggering status identification sensors 161 are arranged. The trap element triggering status identification sensor holding element 162 is mounted to the trap housing 120, in particular trap housing base 120b, by a trap element triggering status identification device holding element fixing structure 120d. The trap element triggering status identification device holding element fixing structure 120d is fixly connected to the trap housing 120, in particular trap housing base 120b. The trap element triggering status identification device holding element fixing structure 120d and the trap housing base 120b comprises trap element holding devices 120c for mounting, i.e. releasably or fix arranging, the two trap elements on the trap housing base 120b within the trap opening 121. For instance, the trap element holding devices 120c may be a combination of a clamp and a recess, wherein the trap element 130 comprises a respective protrusion which extends into the recess and a respective clamp complementary part at which the clamp affects.

Fig. 7 shows respectively illustrates a data flow within the small animal trap. The first identification device 150, the second identification device 140, the third identification device 190, the trap element triggering status identification device 160 are directly or indirectly by wire or wireless communicatively coupled to the control unit 170 for providing the first small animal identification signal, the second small animal identification signal, the third small animal identification signal, and the trap element triggering status signal to the control unit 170. The control unit 170 may transmit control data to the first identification device 150, the second identification device 140, the third identification device 190, and the trap element triggering status identification device 160 for controlling these devices. The control unit 170 processes the received signals and provides a trap status signal. The trap status signal is transmitted by a display device, like a display or a LED, to the user of the small animal trap 100 and/or by a communication device 171 of the control unit 170 to a user or to a small animal trap system 300 as depicted in Fig. 8 or to an external unit 200. The control unit 170 is also directly or indirectly by wire or wireless communicatively coupled to the energy source 180. The control unit 170 transmits control data to the energy source for controlling the providing of energy from the energy source 180 to the second identification device 150, the third identification device 190, and the trap element triggering status identification device 160. The energy source 180 is electrically connected to the second identification device 150, the third identification device 190, and the trap element triggering status identification device 160.

Fig. 8 shows respectively illustrates a small animal trap system. The small animal trap system 300 comprises a small animal trap monitoring device 310. The small animal trap monitoring device 310 is configured for monitoring at least one small animal trap 100. The small animal trap system 300 further comprises a plurality of small animal traps 100 as described above. The small animal trap monitoring device 310 includes receiving unit 311. The receiving unit 311 receives an trap status signal from a communication device 171 of the control unit 170 of each one of the small animal traps 100. Further, the small animal trap monitoring device 310 comprises a display unit 312. The display unit 312 is configured for providing and/or displaying the received trap status signal to at least one user of the small animal trap system 300. The display is a combination of a light emitting diode and a display providing information to the user of the small animal trap system.

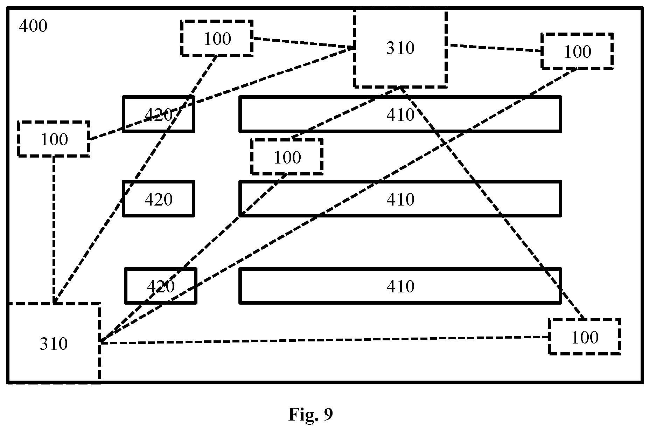

Fig. 9 shows respectively illustrates a store (facility, location) map, i.e. a map of a store, including a plurality of small animal traps. Within the store 400, a plurality of racks 410 and cash registers 420 are arranged. Below or next to the racks 410 and/or the cash registers, there are arranged respectively located a plurality of small animal traps 100. Each one of the small animal traps 100 is communicatively coupled to a plurality of small animal trap monitoring devices 310. The communication may be a one-way communication, i.e. from the small animal trap 100 to the at least one small animal trap monitoring devices 310 or a two-way communication, wherein each one of the small animal trap monitoring devices 310 controls the small animal traps and receives the trap status signal from each one of the small animal traps 100. The use of a plurality of small animal trap monitoring device 310 may ensure that all small animal traps are able to (properly) communicate with at least one small animal trap monitoring devices 310 regardless of the shape of the store 400.

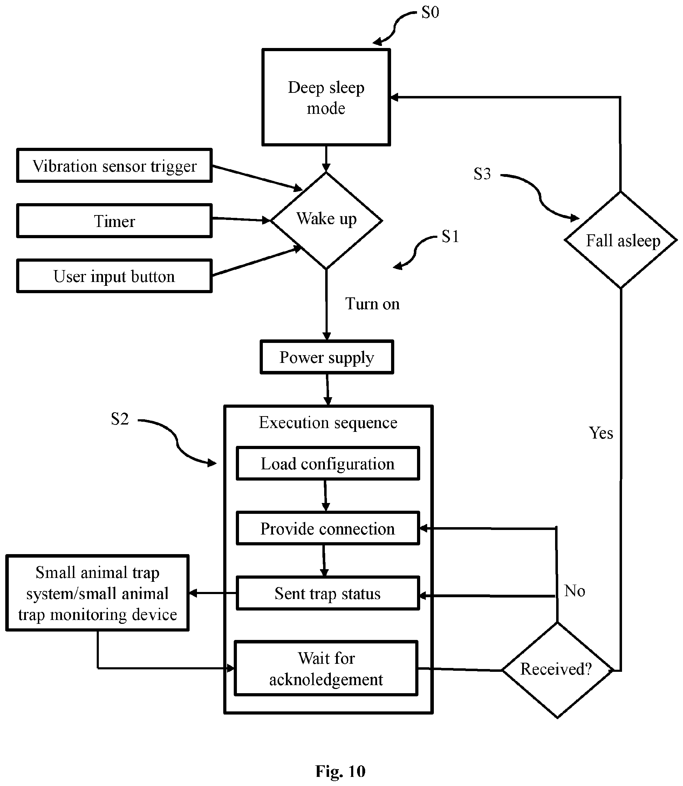

Fig.10 shows respectively illustrates an exemplary proceeding for an energy saving mode of the small animal trap. In this context, the proceeding for an energy saving mode is a deep sleep mode. In a first state S0, the whole small animal trap 100 is in a deep sleep mode, in which all or almost all electronic components respectively units, i.e. the second identification device 150, the trap element triggering status identification device 160, the control unit 170, the energy source 180, and/or the third identification device 190, of the small animal trap 100 are turned off or not provided with power/energy by the energy source 180. When the vibration sensor, in particular the piezo sensor, i.e. the first identification device 150e, identifies a small animal, when a timer has expired or when the user has provided an input via the user input button, the control unit 170 executes a wake-up sequence S1 for waking up the small animal trap 100. In this context, the vibration sensor, i.e. first identification device 150, may be configured for inducing, generating, or receiving just as much energy as is needed to wake up the control unit 170 respectively triggering the control unit 170 to execute a wake-up sequence S1. The timer may provide a periodically waking up of the small animal trap 100 respectively control unit 170, by periodically providing as much energy to the control unit 170 as is needed to wake up the control unit 170 respectively triggering the control unit 170 to execute a wake-up sequence S1, in order to periodically check the trap status and/or providing the trap status data to the small animal trap monitoring device. The user input button may be pressed for more than 5 seconds, for providing as much energy to the control unit 170 as is needed to wake up the control unit 170 respectively triggering the control unit 170 to execute a wake-up sequence S1, in order to trigger the control unit to execute the wake-up sequence S1. Additionally or alternatively, the user input button may be pressed for more than 5 seconds in order to trigger the control unit to execute an fall asleep sequence S3. In the wake-up sequence S1, the control unit 170 controls respectively triggers the energy source 180 to provide energy to the second identification device 150, the trap element triggering status identification device 160, the control unit 170, and/or the third identification device 190. After the control unit has executed the wake-up sequence S1, the control unit 170 executed an execution sequence S2. In the executions sequence S2, the configurations are loaded from a flash memory. The configurations may be DevEUI, AppEUI or AppKey but is not limited thereto. Additionally, in the execution sequence S2 and e.g. after the loading of the configurations, the control unit 170 tries by or via the display and/or communication device 171 to establish a connection with at least one small animal trap monitoring device 310. When the control unit 170 is not able to provide a connection to the at least one small animal trap monitoring device 310 and/or when the connection between the control unit 170 and the at least one small animal trap monitoring device 310 is not stable, the control unit 170 keep trying until communication is available respectively stable. When a connection between the control unit 170 and the at least one small animal trap monitoring device 310 is provided, the control unit 170 sends via or by the display and/or communication device 171 the trap status to the small animal trap monitoring device and waits for an acknowledgement of the small animal trap monitoring device, wherein the acknowledgement indicates that the small animal trap monitoring device 310 has received the transmitted/sent trap status signal. In case, the control unit 170 does not receive an acknowledgement or a pre-set/pre-defined waiting time is expired, the control unit 170 tries again by or via the display and/or communication device 171 to establish a connection with at least one small animal trap monitoring device 310 and/or sent again the trap status signal to the small animal trap monitoring device 310. This is executed by the control unit in a predefined interval or period, e.g. 1, 5, 15 and 60 minutes, wherein then it is set into a regular 12h interval until the control unit 170 has received the acknowledgement. When the control unit170 has received the acknowledgement and therefore the control unit has executed the execution sequence, the control unit 170 executes a fall asleep sequence S3. In the fall asleep sequence S3, the control unit 170 stops the communication to at least one small animal trap monitoring unit 310 and turns off the first identification device 150, the second identification device 140, the trap element triggering status identification device 160, the control unit 170, the energy source 180, and/or the third identification device 190 of the small animal trap 10 after a sleep timer has expired. After turning off all units and/or controlling the energy source to do not further provide energy/power, the small animal trap 100 is back in the deep sleep mode S0.

### Reference signs

- 100: small animal trap
- 120: trap housing
- 120a: trap housing cover
- 120b: trap housing base
- 120c: trap element holding device
- 120d: trap element triggering status identification device holding element fixing structure
- 121: trap opening
- 122: identification device housing
- 122a: control unit housing mounting element
- 130: trap element
- 131: small animal neutralization device
- 1311: clamp
- 1312: spring
- 132: triggering device
- 150: first identification device
- 141: printed circuit board
- 142: printed circuit board connection
- 143: trap element triggering status identification device connection
- 140: second identification device
- 160: trap element triggering status identification device
- 161: trap element triggering status identification sensor
- 162: trap element triggering status identification sensor holding element
- 170: control unit
- 171: display and/or communication device
- 172: control unit housing
- 172a: control unit housing base
- 172b: control unit housing cover
- 180: energy source
- 190: third identification device
- 200: external unit
- 300: small animal trap system
- 310: small animal trap monitoring device
- 311: receiving unit
- 312: display unit
- 400: store
- 410: rack
- 420: cash register

## Claims

1. A small animal trap (100) comprising:
a trap housing (120) having at least one trap opening (121);
at least on trap element (130) is arranged within the trap housing (120), wherein the at least one trap element (130) is accessible via the at least one trap opening (121),
at least one identification device (140) for identifying a parameter and for providing a small animal identification signal corresponding to the parameter,
a control unit (170) accommodated in the trap housing (120) for processing the small animal identification signal and for determining whether the at least one trap element (130) has caught a small animal, and for providing a trap status signal based on the determination, and
at least one energy source (180) accommodated in the trap housing (120) for providing energy at least to the control unit (170) and/or to the at least one identification device (140),
wherein the at least one identification device (140) is a capacitive sensor for measuring a capacitive change in the small animal trap due to an existence of a small animal and the identification device (140) is disposed under or at least partially overlapping with the at least one trap element (130).

2. The small animal trap (100) according to claim 1, wherein the at least one identification device comprises:
at least one first identification device (150) for identifying a first parameter and for providing a first small animal identification signal corresponding to the first parameter,
a second identification device (140) for identifying a second parameter and for providing a second small animal identification signal corresponding to the second parameter, wherein the first and second parameter are different to each other;
wherein the second identification device (140) is the capacitive sensor,
wherein the control unit (170) is configured to process the first small animal identification signal and/or the second small animal identification signal and to determine whether the at least one trap element (130) has caught a small animal, and to provide a trap status signal based on the determination.

3. The small animal trap (100) according to claim 1 or 2, further comprising at least one trap element triggering status identification device (160) for identifying a triggering status of the at least one trap element (130) and for providing a trap element triggering status signal.

4. The small animal trap (100) according to any one of the preceding claims, further comprising at least one third identification device (190) for providing a third small animal identification signal, wherein the at least one third identification device (190) is different to the at least one first identification device (150) and the second identification device (140).

5. The small animal trap (100) according to claims 3 or 4, wherein the at least one energy source (180) is configured for providing energy to the at least one trap element triggering status identification device (160) and/or the at least one third identification device (190), and/or
wherein the control unit (170) is configured for receiving the trap element triggering status signal and/or the third small animal identification signal for identifying if the at least one trap element (130) has caught a small animal and for providing a trap status signal.

6. The small animal trap (100) according to any one of the preceding claims, wherein the control unit (170) is configured for determining the trap status signal based on at least one of the first small animal identification signal, the second first small animal identification signal, the third small animal identification signal and/or the trap element triggering status signal, preferably at least two of the signals are used for determining the trap status signal.

7. The small animal trap (100) according to any one of the preceding claims, wherein the first identification device (150) is a vibration sensor for measuring a vibration in or on the small animal trap, and/or the at least one third identification device (190) is an infrared sensor for measuring a temperature change in the small animal trap, and/or the vibration sensor (150) is located between two trap elements (130).

8. The small animal trap (100) according to any one of the preceding claims 4-7,
wherein the at least one second identification device (140) is provided on a printed circuit board, PCB, and the first identification device (150) and/or the at least one third identification device (190) are electrically connected to the printed circuit board; or
wherein the first identification device (150) is provided on a printed circuit board, PCB, and the at least one second identification device (140) and the at least one third identification device (190) are electrically connected to the printed circuit board; or
wherein the at least one first identification device (150) and the second identification device (140) are provided on a printed circuit board, PCB, and the at least one third identification device (190) is electrically connected to the printed circuit board.

9. The small animal trap (100) according to any one of the preceding claims 4-8, wherein the at least one third identification device (190) is disposed under or at least partially overlapping with the at least one trap element (130); and/or wherein the first identification device (150) is provided in the small animal trap (100).

10. The small animal trap (100) according to any one of the preceding claims 2-9, wherein the first identification device (150) is provided for receiving a vibration caused a triggering of the small animal trap, wherein the at least one second identification device (140) and/or the at least one third identification device (190) is only activated by the control unit (170), if a vibration has been detected by the first identification device (150).

11. The small animal trap (100) according to any one of the preceding claims, wherein the at least one trap element (130) includes:
a small animal neutralization device (131) for neutralizing a small animal; and
a triggering device (132) for triggering the small animal neutralization device (131), preferably the small animal neutralization device (131) is a clamp (1311) which is pre-stressed by a spring (1312) and moves from a rest position to a triggering position and which is hold by the triggering device (132) in the triggering position and moves back to the rest position when the triggering device (132) is triggered.

12. The small animal trap (100) according to any one of claims 11, wherein the triggering device (132) is designed as a weight sensor and triggers when a weight is exceeded, or is designed as a light barrier and triggers when a light barrier is broken, or is designed as a temperature sensor and triggers when a threshold temperature is exceeded, or is designed as a motion sensor and triggers when there is movement, or is designed as a touch sensor and triggers when touched mechanically, or is designed as a photosensitive element and triggers when the light changes or a combination thereof.

13. The small animal trap (100) according to any one of the preceding claims, wherein the control unit (170) includes an indicator and/or a display and/or communication device (171) for displaying the trap status signal and/or for providing the trap status signal to an external unit (200) and/or the control unit (170) is further configured for controlling the at least one energy source (180) for temporarily providing energy to at least one of the second identification device (140), the at least one third identification device (190) and/or the at least one trap element triggering status identification device (160).

14. The small animal trap (100) according to any one of the preceding claims, wherein the at least one trap element (130) comprises two trap elements (130), wherein the at least one trap opening (121) comprises two trap openings (121) being arranged at opposing sides of the trap housing (120), wherein the trap housing (120) is configured as a tunnel, preferably the trap element triggering status identification device (160) is arranged between the two trap elements (130).

15. A small animal trap system (300) comprising:
a small animal monitoring trap device (310) for monitoring at least one small animal trap (100);
at least one small animal trap (100) according to any one of the preceding claims;
wherein the small animal trap monitoring device (310) includes a receiving unit (311) for receiving a trap status signal of a communication device (171) of the control unit (170) and includes a display unit (312) for providing and/or displaying the received trap status signal to at least one user of the small animal trap system (300).
